# EUROPÄISCHE PATENTSCHRIFT

(11) **EP 0 800 758 B1**
(45) Veröffentlichungstag und Bekanntmachung des Hinweises auf die Patenterteilung: **29.12.1999**
(21) Anmeldenummer: 97105966.2
(22) Anmeldetag: 11.04.1997
(51) Int. Cl.: A01C 23/00

(54) **Düngevorrichtung**
Drive axle for agricultural harvesting machine
Axe d'entraînement d'une moissonneuse

(30) Priorität: 11.04.1996 DE 19614327
(43) Veröffentlichungstag der Anmeldung: 15.10.1997
(73) Patentinhaber: Stahlbau Küppers GmbH Fahrzeugbau & Edelstahlverarbeitung, 52525 Heinsberg (DE)
(72) Erfinder: Küppers, Horst, Dipl.-Ing., 52525 Heinsberg (DE)
(74) Vertreter: Castell, Klaus, Dr.

(56) Entgegenhaltungen:
- DE-A- 4 430 072
- FR-A- 2 178 700
- FR-A- 2 508 823
- US-A- 4 530 463

## Beschreibung

Die Erfindung betrifft eine Düngevorrichtung zur ortsgenauen Ablage von Flüssigkeit in den Boden mit einem Vorratsbehälter, einer Pumpe und einer Flüssigkeitsablegeeinrichtung nach dem Oberbegriff des Anspruchs 1.

Eine derartige Vorrichtung ist bereits aus US-A-4 530 463 bekannt.

Bei Düngevorrichtungen werden Vorrichtungen zum Ausbringen von Flüssigdünger und Vorrichtungen zur Abgabe von festen Düngerteilchen wie Pulver oder Körpern unterschieden. Die vorliegende Erfindung betrifft Düngevorrichtungen zur Abgabe von in einer Flüssigkeit gelösten oder verteilten Düngemitteln.

Hierbei werden wiederum Sprühvorrichtungen von Düngevorrichtungen unterschieden, die zur ortsgenauen Ablage von Flüssigkeit in den Boden geeignet sind. Während erstere eine weitflächige gleichmäßige Düngemittelverteilung auf der Oberfläche des Bodens anstreben, dienen letztere dazu, punktuell oder linienweise an vorbestimmten in ihrer Lage klar definierten Orten oder Linien Düngemittelmengen, genau dosiert in den Boden einzubringen.

Derartige Vorrichtungen zur ortsgenauen Ablage von Flüssigkeit in den Boden bestehen üblicherweise aus einem Vorratsbehälter, in dem das Düngemittel aufbewahrt ist und einer Schlauchpumpe, die das Düngemittel zu einer Flüssigkeitsablegeeinrichtung fördert. Da die Schlauchpumpe nicht selbst ansaugend arbeitet, befindet sich der Vorratsbehälter oberhalb der Pumpe, so daß die Flüssigkeit im Vorratsbehälter auf die Pumpe drückt.

Beim praktischen Einsatz derartiger Düngevorrichtungen hat sich jedoch herausgestellt, daß der unterschiedliche Flüssigkeitsstand im Vorratsbehälter sich auf die ausgebrachte Düngemittelmenge auswirkt. Die ausgebrachte Menge schwankt daher während der Düngung um über 10 % des abgegebenen Düngemittelvolumens und dies führt zu einer Überdüngung oder zu einer Unterdüngung, die sich negativ auf das Düngeergebnis auswirkt.

Es wurde auch vorgeschlagen, anstelle einer Pumpe einen Druckkessel zu verwenden, der als Vorratsbehälter dient und bei dem auf die Flüssigkeitsoberfläche ein Druckluftvolumen drückt. Die Ausbildung des gesamten Vorratsbehälters als Druckkessel führt jedoch zu hohen Herstellungskosten. Wenn hingegen ein kleinerer, handelsüblicher Edelstahldruckkessel verwendet wird, ist dieser nicht dazu geeignet, den gesammten Tagesvorrat aufzunehmen, und ein Nachfüllen des Behälters mehrmals am Tag ist zeitaufwendig und unproduktiv.

Der Erfindung liegt daher die Aufgabe zugrunde, eine gattungsgemäße Düngevorrichtung so weiterzubilden, daß über einen längeren Zeitraum eine konstante Düngemittelausbringung gewährleistet wird.

Diese Aufgabe wird mit einer Düngevorrichtung mit den Merkmalen des Anspruchs 1 gelöst,

Die erfindungsgemäße Düngevorrichtung erlaubt den Einsatz einer starken Pumpe, um eine kontinuierliche Versorgung der Flüssigkeitsablageeinrichtung zu gewährleisten. Da eine Rückleitung zum Vorratsbehälter vorgesehen ist und vor der Flüssigkeitsablegeeinrichtung eine Durchflußkontrolleinrichtung angeordnet ist, wirkt sich eine zu starke Leistung der Pumpe nicht auf die Düngemittelabgabe an der Flüssigkeitsablegeeinrichtung aus. Der Vorratsbehälter kann drucklos ausgeführt werden und die Ringleitung sorgt in Verbindung mit der Pumpe für eine kontinuierliche Umwälzung des Düngemittels und eine homogene Durchmischung im Vorratsbehälter.

Da die Flüssigkeitsablegeeintrichtung mehrere Leitungen zur Flüssigkeitsablage aufweist, ist vorgeschlagen, jeweils zugeordnete Kontrolleinrichtungen vorzusehen, die für jede Flüssigkeitsleitung separat die abgegebene Flüssigkeitsmenge anzeigen, oder zumindest anzeigen, ob überhaupt Flüssigkeit abgegeben wird. Wenn eine einzelne Leitung der Flüssigkeitsablegeeinrichtung verstopft und an der zentralen Durchflußkontrolleinrichtung ein konstanter Durchfluß eingeregelt wird, wird über die übrigen Leitungen eine zu hohe Düngemittelmenge abgegeben. Daher wird vorgeschlagen, an den einzelnen Leitungen den Durchfluß zu kontrollieren, damit bei einer unterschiedlichen Flüssigkeitsabgabe in den einzelnen Leitungen ein Kontrollsignal ausgelöst werden kann.

Vorteilhaft ist es, wenn die Pumpe über die Zapfwelle einer Zugmaschine antreibbar ist. Da sich die Leistung der Pumpe nicht direkt auf die ausgebrachte Düngemittelmenge auswirkt, kann die Pumpe über die Zapfwelle des Schleppers angetrieben werden, der die gesamte Düngevorrichtung über das Feld zieht.

Eine vorteilhafte Ausgestaltung der Erfindung sieht vor, daß in der Ringleitung ein Druckbegrenzungventil vorgesehen ist. Dieses Druckbegrenzungsventil ist vorzugsweise zwischen der Pumpe und der Abzweigung angeordnet und verhindert als Sicherheitsventil einen zu hohen Druck in der zur Düngevorrichtung.

Vorteilhaft ist es auch, wenn in der Ringleitung in Flußrichtung zwischen dem Vorratsbehälter und der Abzweigung ein Filter vorgesehen ist. Ein derartiger Filter verhindert die Verschutzung der Durchflußkontrolleinrichtung und gegebenenfalls des Druckbegrenzungsventils. Außerdem verhindert er, daß größere Partikel zur Flüssigkeitsablegeeinrichtung gelangen, die dort den Durchfluß von Düngemittel behindern könnten.

Vorzugsweise ist in der Ringleitung in Flußrichtung zwischen der Abzweigung und dem Vorratsbehälter ein Rückschlagventil vorgesehen. Dieses Rückschlagventil verhindert ein Zurückfließen von Düngemittel vom Vorratsbehälter zur Flüssigkeitsablegeeinrichtung entgegen der vorgesehenen Flußrichtung. Wenn der Vorratsbehälter von der restlichen Düngevorrichtung beispielsweise durch Schnellkupplungen abkuppelbar ist, ist das Rückschlagventil aufder Seite des Vorratsbehälters anzubringen, um ein Auslaufen von Düngemittel bei abgekoppeltem Vorratsbehälter zu unterbinden.

Die Durchflußkontrolleinrichtung weist vorzugsweise einen Druckregler und eine Durchflußmeßeinrichtung auf. Dies ermöglicht die Regelung der abgegebenen Düngemittelmenge, in dem bei zu hohem Durchfluß der Druck reduziert wird und bei sinkenden Durchflußraten der Druck am Druckregler erhöht wird.

Um Verstopfungen in den einzelnen Flüssigkeitsleitungen zu vermeiden, wird vorgeschlagen, am Flüssigkeitsablegeende der Leitungen jeweils eine Düse vorzusehen. Die Düse führt zu einem erhöhten Druck zwischen Pumpe und Ablegeeinrichtung und dadurch zu einer höheren Flüssigkeitsgeschwindigkeit im Bereich der Leitungsöffnung und verhindert dadurch ein Eindringen von Bodenteilchen in die Flüssigkeitsleitung. Da die Flüssigkeitsablegeeinrichtung eine Flüssigkeitsabgabe im Boden ermöglichen soll, ist das Ende der einzelenen Leitungen, an dem die Flüssigkeit aus der Flüssigkeitsablegeeinrichtung austritt, extrem verstopfungsgefährdet. Da in der Praxis eine Berührung zwischen den Leitungen der Flüssigkeitsablegeeinrichtung und dem Boden unvermeidbar ist, verstopfen bei herkömmlichen Düngevorrichtungen immer wieder einzelne Röhrchen am Flüssigkeitsaustritt, was ein ungleichmäßiges Düngeergebnis zur Folge hat. Der am Leitungsende anliegende Druck, der durch die erfindungsgemäßen Düsen erzielt wird, verhindert jedoch ein Eindringen von Bodenpartikeln in die Leitung und sorgt für eine ständige Reinigung der Leitungsenden.

Um die mit der Düngevorrichtung meßbaren Durchflußmengen zu kontrollieren, ist vorzugsweise ein Computer vorgesehen, der Sollwertabweichungen anzeigt und es ermöglicht, die Parameter der Vorrichtung individuell einzusellen.

Eine vorteilhafte Ausgestaltung der Erfindung sieht vor, daß an der Düngevorrichtung oder der die Düngevorrichtung ziehenden Zugmaschine eine Geschwindigkeitsmeßeinrichtung vorgesehen ist, um die Geschwindigkeit der Düngevorrichtung relativ zum Boden zu messen. Als Geschwindigkeitsmeßeinrichtung eignen sich vor allem Induktionsmeßgeräte, die an einem Rad, das am Boden abrollt, berührungslos die Geschwindigkeit messen. Proportional zur gemessenen Geschwindigkeit der Düngevorrichtung ist die Durchflußkontrollvorrichtung steuerbar, damit bei geringer Geschwindigkeit wenig Düngemittel pro Zeit und bei hoher Geschwindigkeit viel Düngemittel pro Zeit ausgebracht wird.

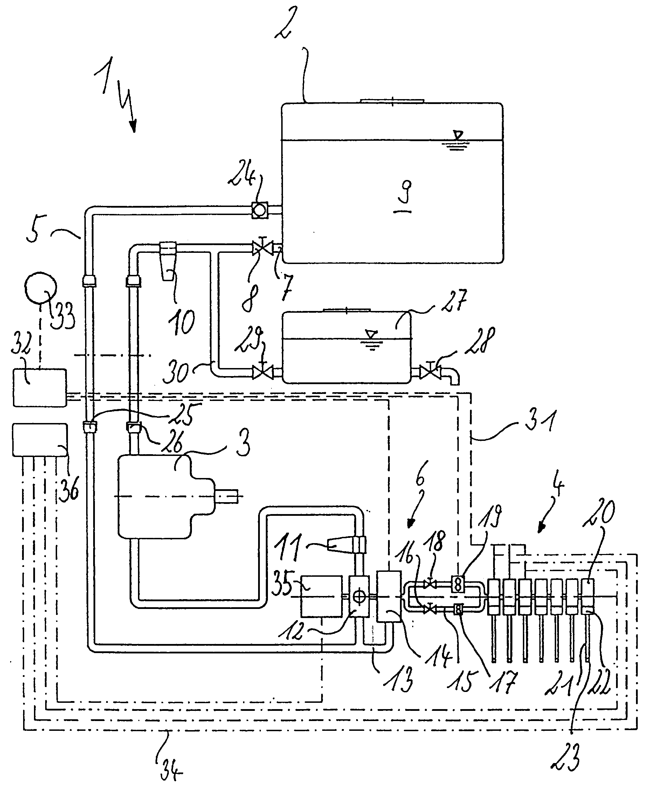

Eine erfindungsgemäße Vorrichtung ist schematisch in der Zeichnung dargestellt und wird im Folgenden näher erläutert.

Es zeigt die einzige Figur ein Schema der Düngevorrichtung.

Die Düngevorrichtung 1 besteht im wesentlichen aus einem Vorratsbehälter 2, einer Pumpe 3, einer Flüssigkeitsablegeeinrichtung 4, einer Ringleitung 5 und einer Durchflußkontrolleinrichtung 6.

Der Vorratsbehälter 2 hat einen Abfluß 7 mit einem Ventil 8, über das Düngemittel 9 vom Vorratsbehälter 2 zu einem ersten Filter 10 gelangt.

Von dort fließt das Düngemittel 9 weiter zur Pumpe 3, die von der Zapfwelle eines Schleppers (nicht gezeigt) angetrieben wird. Der Schlepper zieht die Düngevorrichtung und treibt über seine Zapfwelle die Pumpe 3 der Düngevorrichtung 1 an. Das Düngemittel 9 fließt dann mit erhöhtem Druck in der Ringlietung 5 weiter zu einem zweiten Filter 11, der unmittelbar vor einem Druckbegrenzungsventil 12 angeordnet ist. Vom Druckbegrenzungsventil führt eine Abzweigung 13, über die Düngemittel 9 aus der Ringleitung 5 entnehmbar ist und die zu einem Druckregler 14. Hinter dem Druckregler verzweigt sich die Düngemittelleitung 15 und führt entweder über ein Ventil 16 zu einer Durchflußmeßeinrichtung 17 für geringe Volumenströme, oder über ein Ventil 18 zu einer Durchflußmeßeinrichtung 19 für große Volumenströme. Beide Leitungswege vereinigen sich vor der Flüssigkeitsablegeeinrichtung 4, die im vorliegenden Fall aus sieben Ablegeeinheiten 20 besteht. Die von der Abzweigung 13 kommende Leitung 15 führt somit über den Druckregler 14 und alternativ über eines der Ventile 16 oder 18, und eine der Durchflußmeßeinrichtungen 17 oder 19 zu allen Ablegeeinheiten 20.

Die Ablegeeinheiten 20 weisen jeweils eine Flüssigkeitsleitung 21, eine Durchflußkontrolleinrichtung 22 und eine Düse 23 auf.

Von der Abzweigung 13 führt die Ringleitung 5 über ein Rückschlagventil 24 zurück in den Vorratsbehälter 2.

Die Ringleitung 5 ist so ausgebildet, daß der Vorratsbehälter 2 von der Pumpe 3 und der Flüssigkeitsablegeeinrichtung 4 leicht über Schnellkupplungen 25, 26 abtrennbar ist.

Außerdem ist ein Frischwassertank 27, der über einen Hahn 28 entleerbar ist, über einen Kugelhahn 29 und eine Frischwasserleitung 30 mit der Ringleitung 5 verbindbar.

Über Leitungen 31 sind der Druckregler 14, die Durchflußmeßeinrichtungen 17, 19 und die Durchflußkontrolleinrichtung 22 mit einem Computer 32 verbunden. Außerdem führt eine Leitung vom Computer 32 zu einem induktiven Geschwindigkeitsmeßgerät 33, das die Geschwindigkeit der Düngevorrichtung 1 relativ zum Boden mißt.

Weitere Leitungen 34 verbinden sowohl einen Hauptschalter 35, als auch die Ablegeeinrichtungen 20 mit einer Schaltvorrichtung 36, an der sowohl jede einzelne Ablegeeinheit 20, als auch die gesamte Flüssigkeitsablegeeinrichtung 4 ein bzw. ausgeschaltet werden kann.

In der schematischen Darstellung sind die Leitungen 34 und 31 nur für die ersten drei Ablegeeinheiten 20 eingezeichnet, obwohl selbstverständlich auch die anderen Ablegeeinheiten entsprechend ausgerüstet sind.

Die Zahl der Ablegeeinheiten ist beliebig variierbar. Im vorliegenden Beispiel sind sieben Ablegeeinheiten 20 eingezeichnet. Die Zahl der Ablegeeinheiten 20 liegt im vorliegenden Beispiel in der Grundausrüstung der Düngevorrichtung bei drei Ablegeeinheiten, die durch eine Zusatzvorrichtung auf sieben Ablegeeinheiten erweiterbar ist.

Beim Betrieb der Düngevorrichtung 1 wird Düngemittel 9 durch den Abfluß 7 über das Ventil 8 und den Filter 10 durch die Ringleitung 5 zur Pumpe 3 angesaugt. Die Pumpe 3 fördert das Düngemittel 9 nun weiter über den zweiten Filter 11 zum Druckbegrenzungsventil 12, das den Druck in der Ringleitung 5 unterhalb eines bestimmten Maximal-Druckes hält. Über die Ringleitung fließt das Düngemittel nun wieder zurück über ein Rückschlagventil 24 in den Vorratsbehälter 2.

Bei diesem Kreislauf wird das Düngemittel im Vorratsbehälter 2 gemischt und die einzelnen Aggregate werden gespült.

Wenn die Düngevorrichtung 1 von einem Schlepper über das Feld gezogen wird meldet die Geschwindigkeitsmeßeinrichtung 33 die Bewegung der Düngevorrichtung relativ zum Boden an den Computer 32, der den Druckregler 14 öffnet, so daß Flüssigkeit aus der Ringleitung 5 über die Abzweigung 13 zur Flüssigkeitsablegeeinrichtung 4 gelangt. Durchflußmeßeinrichtungen 17, 19 messen den von der Ringleitung zur Flüssigkeitsablegeeinrichtung 4 strömenden Volumenstrom und melden diesen Wert an den Computer 32, der ihn mit einem Sollwert vergleicht und entsprechend der Regelabweichung auf den Druckregler 14 einwirkt. Bei der Sollwerteinstellung für den Volumenstrom an der Durchflußmeßeinrichtung berücksichtigt der Computer 32 die von der Geschwindigkeitsmeßeinrichtung angegebene Geschwindigkeit, so daß bei hoher Geschwindigkeit der Düngevorrichtung relativ zum Boden mehr Düngemittel ausgebracht wird als bei niedrigeren Geschwindigkeiten.

Diese Regelstrecke sorgt für einen gleichmäßigen Druck an allen Düsen 23 am Ende der Leitungen 21 der Ablegeeinheiten 20, der nur in Abhängigkeit von der Fahrgeschwindigkeit variiert. Die hohe Düngemittelgeschwindigkeit in den Düsen am Ende der Leitungen 21 verhindert ein Verstopfen der Düsen. Sollte hingegen trotzdem eine Düse verstopfen, führt dies zwangsläufig zu einer erhöhten Düngemittelabgabe durch die anderen Düsen. Um dies zu vermeiden, ist an jeder Ablegeeinheit 20 eine Durchflußkontrolleinrichtung 22 vorgesehen, die den Ausfall einer Ablegeeinheit 20 dem Computer 32 meldet. Der Computer 32 zeigt dies einerseits durch ein Signal an und andererseits reduziert er die Durchflußmenge, damit im Bereich der übrigen Ablegeeinheiten 20 keine Überdüngung eintritt. Bei Überschreitung einer bestimmten Minimalgeschwindigkeit des Zugsfahrzeugs schaltet der Computer 32 über den Hauptschalter 35 den Zufluß zur Flüssigkeitsablegeeinrichtung aus und bei Überschreiten der Minimalgeschwindigkeit wieder an.

Die vorgesehene Regelung erlaubt somit eine konstante Düngemittelmengenausbringung pro Fläche auf vorgegebenen eng begrenzten Linien, die für eine Amonium-Depot-Düngung notwendig ist. Mit der erfindungsgemäßen Vorrichtung kann jedoch auch eine impulsweise Ausbringung von Düngemitteln erfolgen, wobei auch die Frequenz der Düngemittelausbringung in Abhängigkeit von der Geschwindigkeit der Düngevorrichtung relativ zum Boden steuerbar ist.

Derartige Düngevorrichtungen erlauben eine gezielte Ausbringung des Düngemittels während des Pflanzvorganges und daher ist gerade die Kombination der erfindungsgemäßen Vorrichtung mit einer Pflanz- oder Sähmaschine von hoher wirtschaftlicher Bedeutung.

Üblicherweise wird der Sollwert für die pro Fläche auszubringende Düngemittelmenge manuell vorgegeben und dieser Sollwert ergibt sich aus der Differenz zwischen der im Boden vorhandenen Düngemittelmenge und der angestrebten Düngemittelmenge. Es ist jedoch auch möglich, mit der Vorrichtung die vorhandene Düngemittelmenge im Boden zu messen, mit der angestrebten Düngemittelmenge zu vergleichen und entsprechend dieser Differenz die auszubringende Düngemittelmenge über den Computer zu steuern.

## Patentansprüche

1. Düngevorrichtung (1) zur ortsgenauen Ablage von Flüssigkeit (9) in den Boden mit einem Vorratsbehälter (2), einer Pumpe (3) und einer Flüssigkeitsablegeeinrichtung (4), wobei eine Ringleitung (5) vom Vorratsbehälter (2) über eine Pumpe (3) zu einer Abzweigung (13) und zurück zum Vorratsbehälter (2) vorgesehen ist und zwischen der Abzweigung (13) und der Flüssigkeitsablegeeinrichtung (4) eine Durchflußkontrollvorrichtung (6) vorgesehen ist, ***dadurch gekennzeichnet, daß*** die Flüssigkeitsablegeeinrichtung (4) mehrere Leitungen (21) zur Flüssigkeitsablage mit jeweils zugeordneter Durchflußkontrolleinrichtung (22) aufweist.

2. Düngevorrichtung nach Anspruch 1, ***dadurch gekennzeichnet, daß*** die Pumpe (3) über die Zapfwelle einer Zugmaschine antreibbar ist.

3. Düngevorrichtung nach Anspruch 1 oder 2**, *dadurch gekennzeichnet, daß*** in der Ringleitung (5) ein Druckbegrenzungsventil (12) vorgesehen ist.

4. Düngevorrichtung nach einem der vorhergehenden Ansprüche*, **dadurch gekennzeichnet, daß*** in der Ringleitung (5) in Fließrichtung zwischen dem Vorratsbehälter (2) und der Abzweigung (13) ein Filter (10,11) vorgesehen ist.

5. Düngevorrichtung nach einem der vorhergehenden Ansprüche, ***dadurch gekennzeichnet, daß*** in der Ringleitung (5) in Flußrichtung zwischen der Abzweigung (13) und dem Vorratsbehälter (2) ein Rückschlagventil (24) vorgesehen ist.

6. Düngevorrichtung nach einem der vorhergehenden Ansprüche, ***dadurch gekennzeichnet, daß*** die Durchflußkontrollvorrichtung (6) einen Druckregler (14) und eine Durchflußmeßeinrichtung (17,19) aufweist.

7. Düngevorrichtung nach einem der vorhergehenden Ansprüche*, **dadurch gekennzeichnet, daß*** das Flüssigkeitsablegeende der Leitungen (21) jeweils eine Düse (23) aufweist.

8. Düngevorrichtung nach einem der vorhergehenden Ansprüche, ***dadurch gekennzeichnet, daß*** ein Computer (32) vorgesehen ist, um die Durchflußmengen zu kontrollieren.

9. Düngevorrichtung nach einem der vorhergehenden Ansprüche, ***dadurch gekennzeichnet, daß*** eine Geschwindigkeitsmeßeinrichtung (33) vorgesehen ist, um die Geschwindigkeit der Düngevorrichtung (1) relativ zum Boden zu messen.

## Claims

1. A fertiliser apparatus for localised depositing of fluid (9) into the ground having a storage tank (2), a pump (3) and fluid deposit mechanism (4), whereby a closed circular pipeline (5) leading from the storage tank (2) to a pipe junction (13) by way of a pump (3) and back to the storage tank (2) is provided, and a throughput control instrument (6) is provided between the pipe junction (13) and the fluid deposit mechanism (4), characterised in that the fluid deposit mechanism (4) comprises several pipes (21) for depositing fluid with a respectively assigned throughput control instrument (22).

2. A fertiliser apparatus as claimed in claim 1, characterised in that pump (3) is powered by the takeoff shaft of a traction engine.

3. A fertiliser apparatus as claimed in claim 1 or 2, characterised in that a pressure control valve (12) is provided in the closed circular pipeline. (5).

4. A fertiliser apparatus as claimed in any one of the foregoing claims, characterized in that a filter (10, 11) is provided in the closed circular pipeline (5) in the direction of flow between the storage tank (2) and the pipe junction (13).

5. A fertiliser apparatus as claimed in any one of the foregoing claims, characterised in that a return valve (24) is provided in the direction of flow between the pipe junction (13) and the storage tank (2).

6. A fertilizer apparatus as claimed in any one of the foregoing claims, characterised in that the throughput control instrument (6) comprises a pressure regulator (14) and a throughput measuring device (17, 19).

7. A fertiliser apparatus as claimed in any one of the foregoing claims, characterised in that each fluid depositing end of the pipes (21) comprises a nozzle (23).

8. A fertiliser apparatus as claimed in any one of the foregoing claims, characterised in that a computer (32) is provided to control the throughput quantities.

9. A fertilizer apparatus as claimed in any one of the foregoing claims, characterised in that a speed measuring instrument (33) is provided for measuring the speed of the fertilizer apparatus (1) relative to the ground.

## Revendications

1. Dispositif d'épandage d'engrais (1) assurant un épandage précisément localisé de liquide (9) dans le sol, comprenant un réservoir (2), une pompe (3) et un dispositif d'épandage de liquide (4), dispositif dans lequel on a prévu une canalisation en boucle (5) partant du réservoir (2) et conduisant à une dérivation (13), par l'intermédiaire d'une pompe (3), et retournant au réservoir (2), et où un dispositif de contrôle du débit (6) est prévu entre la dérivation (13) et le dispositif d'épandage de liquide (4), caractérisé en ce que le dispositif d'épandage de liquide (4) présente plusieurs canalisations (21) destinées à l'épandage du liquide et possédant toutes un dispositif de contrôle du débit (22) associé.

2. Dispositif d'épandage d'engrais selon la revendication 1, caractérisé en ce que la pompe (3) peut être entraînée par la prise de force d'un tracteur.

3. Dispositif d'épandage d'engrais selon la revendication 1 ou 2, caractérisé en ce qu'un limiteur de pression (12) est prévu dans la canalisation en boucle (5).

4. Dispositif d'épandage d'engrais selon l'une des revendications qui précèdent, caractérisé en ce qu'un filtre (10, 11) est prévu dans le sens de l'écoulement, entre le réservoir (2) et la dérivation (13).

5. Dispositif d'épandage d'engrais selon l'une des revendications qui précèdent, caractérisé en ce qu'une soupape de sûreté (24) est prévue dans le sens de l'écoulement, entre la dérivation (13) et le réservoir (2).

6. Dispositif d'épandage d'engrais selon l'une des revendications qui précèdent, caractérisé en ce que le dispositif de contrôle du débit (6) présente un régulateur de pression (14) et un dispositif de mesure du débit (17, 19).

7. Dispositif d'épandage d'engrais selon l'une des revendications qui précèdent, caractérisé en ce que les extrémités des canalisations (21) par lesquelles du liquide est déversé présentent un ajutage (23).

8. Dispositif d'épandage d'engrais selon l'une des revendications qui précèdent, caractérisé en ce qu'un ordinateur (32) est prévu pour contrôler les débits.

9. Dispositif d'épandage d'engrais selon l'une des revendications qui précèdent, caractérisé en ce qu'on a prévu un dispositif de mesure de la vitesse (33) pour mesurer la vitesse du dispositif d'épandage d'engrais (1) par rapport au sol.
